# EUROPEAN PATENT APPLICATION

(11) **EP 2 667 583 A2**
(43) Date of publication of application: **27.11.2013**
(21) Application number: 12198876.0
(22) Date of filing: 21.12.2012
(51) Int. Cl.: H04N 1/00

(54) **Hand-held remote control device with context-driven dynamic display**

(30) Priority: 22.05.2012 US 201261649947 P
(71) Applicant: Nagravision S.A., 1033 Cheseaux-sur-Lausanne (CH)
(72) Inventor: Dagaeff, Thierry, 1148 L'Isle (CH)
(74) Representative: Leman Consulting S.A.

(57) **Abstract**

The present invention relates to a remote control device with an integrated display. The remote control device is hand-held and is preferably operable using the thumb of the hand holding the device, thereby providing ease of control to the user. The device may comprise a multi-way input device, such a joystick, preferably located near the centre of the integrated display, providing a convenient navigation and selection means to a menu displayed on the remote control device's display. The menu is dynamic allowing for context-driven control to be made over a controlled device using a bidirectional wireless communication channel between the remote control device and the controlled device.

## Description

### TECHNICAL FIELD

The present invention relates to the field of remote control devices, especially those for controlling media content players such as a television set, a set-top box, a digital television integrated receiver, a DVD player or a CD player for example.

### BACKGROUND ART

Since the creation of the remote control (RC) for the TV in 1951, little progress has been made. The features supported by the early remote controls, hereafter referred to as the 'basic features', are mainly: the ability to change channel (channel zapping); and the ability to control the volume. Basically, about 95% of a user's TV experience may be described as very passive. The user is in his sofa uses the RC to lazily and mindlessly switch channels. This type of TV experience may also be referred to as the "lean-back experience".

When new features where added to the TV experience, buttons were added to the RC of the TV set (in this context, by TV set or TV it is meant the TV device itself or of the receiving device, like a Set Top Box for example (STB)). By new features it is meant, for instance, the introduction of interactivity, e.g. through teletext, leading to the four blue/yellow/red/green buttons on the RC; or the merging of the Personal Video recorder facilities with the TV set, leading to the introduction of a completely new set of buttons on the RC to control the recording and playback options associated with the recorder facilities.

More recently, the integration of the Internet connection to the TV set greatly increased the range of possibilities for the TV experience with a number of new features. This has had an important impact in the search for new RC design adaptations. With modifications to the TV and/or RC, already known in the state of the art, the Internet connection enables the TV set to display advanced User Interfaces (UI) with several layers and many options. These advanced UI provide new applications ranging from TV-related ones, like new content search facilities or Video On Demand catalogue browsing and item buying, to pure gaming and shopping. They also bring more interactivity, in particular through the Social TV features, where the user may share comments or other material with his social network friends.

This new complexity has significant impact on the way current RC devices are designed. Four different approaches known in the state of the art in RC design are now discussed.

The first approach is to re-use the existing buttons by redirecting their effect depending on the context. For instance, the red button was chosen to trigger interactions with a show which proposes such a possibility. Or the different arrows result in new effects when a widget is active on the TV screen, allowing the user to navigate inside the widget's GUI. Moreover, the colour buttons are often re-directed to navigate inside the widget environment, for instance to select a widget, close a widget, or quit the widget environment itself.

The second approach is to go back to the practice of adding more buttons to the RC in order to interact with the complex UI. For instance, the ability to textually search for content has often resulted in a full keyboard being added to the RC, sometimes on the back of it.

The third approach is to move the interaction with the complex UI onto an appropriate application running on a second device such as a tablet or a smart-phone for example. The said application may be a dedicated application and may simply allow the user to more easily interact with the UI which still resides on the TV. For instance, this Remote Control Application (RCA) brings a keyboard to enter textual searches. In another case, the application is dedicated to a specific type and moment of interaction and carries the full UI: it is no more a RC feature but it replaces the whole TV UI, letting the TV display TV content. This Second Screen Application (SSA) approach for instance consists in developing a whole EPG application on the tablet and enabling the user to select the content directly on this tablet UI, while the selection results in the actual switch of the TV set to the selected content.

The fourth approach is towards a so-called virtual RC, where the user is allowed to control the TV directly with his natural body gestures. For instance a device can be connected to the TV that captures and analyses the user's gestures; such as a right-to-left movement of the hand for example, resulting in a switching from a first context to a second context. A switch of contexts could be a switch from a first panel within the GUI to a second panel within the GUI. This is known in the state of the art as Gesture Control. Another example of Gesture Control uses a device connected to the TV to capture and analyse the user's spoken commands. Gesture Control is particularly well suited for applications such as content search for example, where the user can just tell the TV set what he is looking for. This particular type of Gesture Control is known as Voice Control.

The existing solutions described above are not particularly well-suited to the TV experience or more exactly do not cover the full set of user needs, in particular they achieve nothing more than the lean-back experience.

Remote control devices designed according to the first approach, i.e. redefining buttons, generally leads to a solution which is confusing, leads to inappropriate buttons, and results in overly-complex RC usage scenarios. The buttons have different functions and it becomes difficult to use them in an intuitive way: natural reflexes are not exploited and the user has to concentrate.

The second approach, adding buttons, makes the RC too complex for most situations during actual usage. It no longer has appeal as an engaging device related to a fun or relaxing experience. Most of time, the design of the RC lets the user easily access the buttons that are dedicated to the basic features, by placing such buttons in easy-access positions, while relegating the additional buttons, like the colour ones, to somewhat less ergonomic positions. Thus, the usage of these buttons requires the user to look at his RC or at least to lend a certain amount of concentration. In some cases the user may even have to change hand position in order to reach all of the buttons.

The RCA is a convenient solution where importance is placed on having ready access to a full keyboard for example. However, when simple navigation is required (e.g. to zap channels or change volume) the RCA is cumbersome. The user has to switch on the device first and possibly perform a start-up of the RCA before any possibility of interaction via the RCA actually becomes available. This response time is annoying compared to the traditional RC which is always on and ready. The ergonomics of the rectangular smart-phones and tablets is particularly optimised for information display and control but is rather less convenient for use with a TV when compared to the comfort of a RC of the older type. Moreover, the tablet must be held with two hands, rendering its handling inconvenient.

An example of a remote control device designed in keeping with the second approach is described in United States Patent Application Publication number 2009/009,355 A1. This document describes a remote control device providing ergonomic improvement over other known devices and which is connectable to a network. The remote control device is used to provide control over a controlled device. The remote control device comprises a full keyboard and some embodiments further comprise a joystick. The joystick can be used to navigate through menu items displayed on the controlled device, such items being dependent on a particular context.

Although not specifically directed towards solving the same problems addressed by the present invention, United States Patent Application Publication number 5,724,106 A1 discloses a hand-held remote control device for single hand control of an entertainment system and therefore represents prior art from a neighbouring domain and comprises many features in common with the present invention described herein. The entertainment system comprises a plurality of entertainment devices such as a TV set, a CD player, a video player and son on. The document describes a solution to allow the use of a single remote control device to control all of the entertainment devices in order to solve a problem of having too many remote control devices given that each of the entertainment devices comes with its own remote control device. The solution is to have a central computer with a display, the central computer being connected to all of the entertainment devices and being controllable by the single remote control device. The computer can display a menu depending on which entertainment device is being controlled and the user uses the single remote control device to navigate through the menu and select appropriate commands for the desired entertainment device. The menu which appears on the computer's display is pre-programmed.

The SSA, according to the third approach above, is actually aimed at complementing an RC. An SSA is excellent for handling very specific situations with well-identified contexts and interactions with tailored UI. The approach most often consists in designing several 2nd-Screen applications. Hence, this well-designed separation makes the SSA approach not a replacement of the RC but rather a complement to it.

In keeping with the third approach, in a neighbouring domain to that of the present invention there exists a solution for building a universal remote control device which can be tailored to controlling a number of different household entertainment devices. The solution comes from the neighbouring domain of mobile communication devices, more particularly so called Smart-phone devices having a touch-screen interface. By installing an appropriate application the Smart-phone can be configured to function as a remote control device for a television set or a video player, for example. The solution is somewhat similar to the one presented above except that instead of using a dedicated remote controller device it uses a mobile telephone device suitably adapted using an application. Using a specially adapted software package (usually on a website of the application designer), a user selects appropriate virtual buttons and images to build a virtual remote control customised for a given apparatus to be controlled. Each button corresponds to a predetermined function for a particular piece of apparatus in a library of recognised pieces of apparatus. The user then downloads the finished virtual remote control onto his Smart-phone. The control input of the apparatus to be controlled is connected to one from a plurality of control outputs of a special gateway device (one output per apparatus to be controlled). This connection usually does not have to be made physically since it usually is in the form of an infrared link, where the infrared ports on the gateway device and the controlled device operate on the same frequencies. The gateway is then connected to the home WiFi network using an Ethernet link for example. Using the virtual remote control displayed on the smart-phone the user can then send appropriate remote control commands via the WiFi network to the gateway, which sends the command to the relevant piece of apparatus.

Finally, the fourth approach, virtual or non-material RC, may be perceived as inappropriate depending on the situation. For instance, gesture control does not fit a relaxed position, like lying down on the sofa. An adequately accentuated arm movement, possibly required by a Gesture Control application, can simply not be compared to the convenience if a 1-cm thumb displacement. Background noise, notably ambient noise resulting from the use of the TV itself, depending on the level of said noise, may render Voice Control ineffective. Moreover, it seems that the search for non-physical or virtual types of solutions in the domain of interaction with technology rather corresponds to a fantasy than to a real need. People are quick to adopt physical devices with well-thought ergonomics and feel somewhat lost without such physical or material devices.

For these reasons, non-physical interfaces, like SSA and RSA, do fit well in certain contexts but they still need to be complemented by a physical RC. Most current RC designs however are not able to adequately provide such a complement. Many buttons were added that are now useless given the complementary RCA, SSA, gesture and voice control approaches. The RC must be simplified, yet it must enable to provide navigation into complex interfaces which are enhanced through internet connections.

### BRIEF DESCRIPTION OF THE INVENTION

The present invention is aimed at solving some of the problems described above in the prior art. A remote control device according to embodiments of the present invention should provide a user with a suitable wireless interface to one or more pieces of apparatus. Such an interface should be able to be conveniently customised depending on the user and depending on the apparatus to be controlled. Furthermore the remote control device should present an intuitive, context dependent and easy to manipulate interface to the apparatus, where the user need not necessarily have to look at the remote control device in order to know which parameters he is controlling.

The prior art includes mobile communication devices which can be reconfigured to function as remote control devices. Such devices may therefore be turned into remote control devices having the convenience of having a display for visualising commands to be sent to the controlled device, however they cannot receive feedback from the controlled device. Furthermore, the display presents the known inconveniences of touch-screen displays, including the lack of feedback to the user, preventing him from manipulating the controller without having to look at it.

According to an aspect of the present invention, provision is made for a hand-held remote control device for wirelessly transmitting at least one instruction to a media player operable to function within one from a plurality of different contexts, the remote control device being housed in a body and operable by a single hand of a user, the remote control device comprising:
a first display within the body of the remote control device; and
a wireless communication interface for transmitting the instruction to the media player;
the remote control device characterised in that:
the wireless communication interface is bidirectional, the remote control device being configured to receive graphical content for producing an interactive context-driven menu via the bidirectional wireless communication interface;
the remote control device is configured to display the interactive context-driven menu on the first display, the interactive context-driven menu comprising at least one designated region unambiguously selectable by the user during said single-handed operation, the designated region corresponding to the instruction, said instruction being associated with a current context from the plurality of different contexts; and
the remote control device is further configured such that when the designated region is selected by the user, the corresponding instruction is transmitted via the bidirectional wireless communication interface.

According to a second aspect of the present invention there is provided a media player comprising:
a receiver for receiving media input comprising media content and graphical content;
a wireless communication interface for receiving at least one instruction from a remote control device; and
a second display for displaying at least the media content;
the media player characterised in that:
it further comprises a processor for processing at least the graphical content to provide information useful in building an interactive context-driven menu based on a current context from a plurality of possible contexts within which the media player may function; and
the wireless communication interface is bidirectional, the media player being configured to transmit the information useful in building the interactive context-driven menu to a remote control device via the bidirectional wireless communication interface.

According to a third aspect of the present invention, provision is made for a system comprising the hand-held remote control device described above and the media player described above, the remote control device and the media player configured to communicate with each other via a bidirectional wireless communication channel, wherein:
the media player is configured to transmit to the remote control device, via the bidirectional wireless communication channel, graphical content useful in producing an interactive context-driven menu based on a current context from a plurality of possible contexts within which the media player may function; and
the remote control device is configured to transmit to the media player, via the bidirectional wireless communication channel, at least one instruction based on an at least one gesture by a user on the interactive context-driven menu.

The present invention therefore provides for a context-driven menu to be displayed on a small hand-held remote control device which can be conveniently operated using a single hand. The device is able to be customised for a particular user. The display being small due to the hand-held nature of the device, only a limited number of menu options should be presented at a time depending on the current context of the device being controlled. Only information which is useful in controlling the controlled device at a particular time is shown and not necessarily information related to the content being rendered on the controlled device. Version updates of the controlled device are automatically taken into account because the menu s generated directly from the controlled device. A joystick interface to the remote control device allows the user some physical feedback of which parts of the menu he is actually selecting, without necessarily having to look at the menu all of the time that he is trying to make his selection.

### BRIEF DESCRIPTION OF THE DRAWINGS

The present invention will be better understood thanks to the detailed description which follows and the accompanying drawings, which are given as non-limiting examples of embodiments of the invention, wherein:

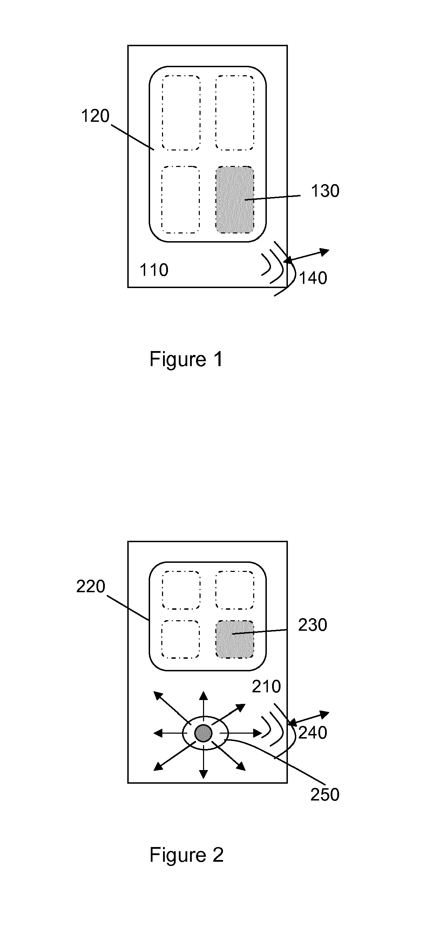

Figure 1 shows a remote control device in which an embodiment of the present invention may be deployed;
Figure 2 shows another a remote control device in which an embodiment of the present invention may be deployed;

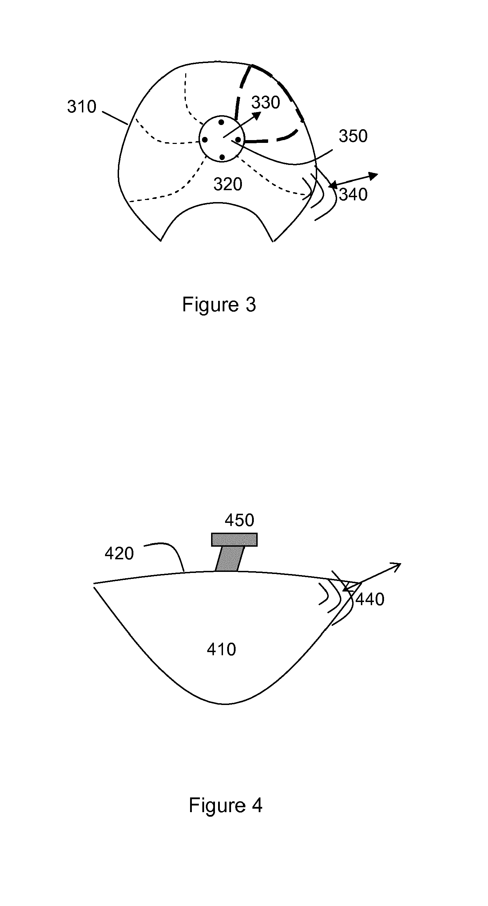

Figure 3 shows yet another remote control device in which an embodiment of the present invention may be deployed;
Figure 4 shows a cross-sectional view of the remote control device of Figure 3;

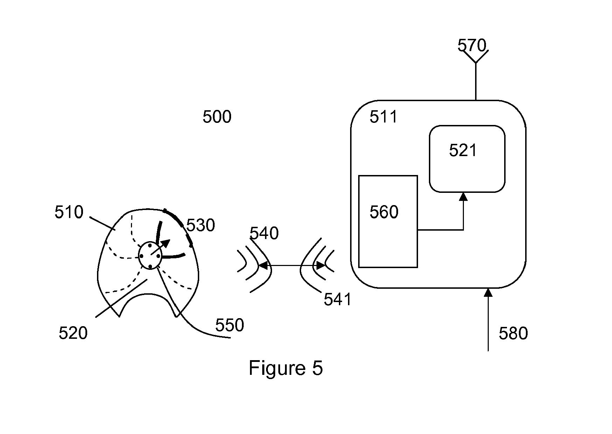

Figure 5 shows a system in which an embodiment of the present invention is deployed.

### DETAILED DESCRIPTION OF THE INVENTION

The inventor of the present invention has realised that one feature which becomes an important constraint for the TV control interface as a whole is personalisation or customisation. Indeed, the personalisation of the TV experience, the personalisation of the content choice through profiling and recommendation, and the personalisation of the graphical user interface provided by the TV GUI is an omnipresent and desirable feature. A further issue, related to such personalisation and to the RC itself, is that the TV must provide a way for the user to be identified. Sometimes, the RC comprises means to identify the user, for instance by embedding a fingerprint sensor. But in all cases, the RC is not marked by the personalisation, in that it does not change its configuration in order to represent the user, thereby personalising the device itself (RC). Thus, the central tool (RC) for the interaction with the personalised experience is not itself personalised. This is an inconsistency. Moreover, when several users are involved, the user who joins the experience may not know for which user the RC and TV is personalised. Eventually, it is difficult to have the same personalised experience in all places with all TV sets, because the personal data, in particular the enrolment data for identification, is only known by the system at the user's home.

According to an embodiment of the present invention, certain advantages recognised by the inventor as being provided by touch screen technology embedded in tablets and smart-phones may be harnessed in an inventive way to allow for a very convenient environment in the domain of remote controlling. Indeed this technology provides for five advantages, which are described below.

Touch screen technology allows for the realisation of a remote control interface (RC) having a display which adapts to a particular context. Different controls, representing different commands or functions, can be displayed, such as buttons, keyboards, switches, or wheels, depending on the state of the controlled device (TV) and on the available functions in a particular context.

This dynamic adaptability also allows for the remote control device to be updated in order to support new features whenever they are introduced on the controlled device.

By displaying only the subset of commands required by a certain context at any given time, this dynamicity also allows for the simplification of the displayed remote control interface (i.e. the interface displayed on the remote control device, otherwise known as the virtual interface) at a particular time, depending on the particular context at that time. The controls (i.e. commands or functions) provided on the displayed remote control interface can be simple, of a manageable number, and represented by bigger shapes.

This allows for all functions of a complex controlled device to be adequately covered without providing at any time a complex displayed virtual interface on the remote control device, even if the controlled device itself were to display some dynamic interfaces and functions. The user therefore is always allowed to navigate inside a simplified contextualised virtual interface. The overall virtual interface may be hierarchical in that is organised in layers that cover different functions and sub-functions. A top level view of the displayed virtual interface allows for the selection of a first function. The next level view of the displayed virtual interface shows controls related to functions or commands available within the selected sub-function, and so on, when, in turn, each of the sub-functions decomposes into subsequent sub-functions.

The dynamicity afforded by embodiments of the present invention allows for the user experience to be personalised by displaying different visualisations of interfaces and with different so-called skins according to the user's personal preferences.

The inventor has further realised that having a remote control device with an adaptable dynamic display raises an issue: the interface can vary so much with the context that it becomes difficult for the user to know the complete interface by heart. It is also worth noting that tablets and smart phones are devices that are made to be held in one hand while looking at them. Furthermore their shape is optimised for the device to be held in a bag, placed on a table or placed in the pocket. This is hardly convenient when such a device is to be used as a remote control device in the context of the present invention.

Moreover, the sensitivity properties of tablets and smart phones add to the problem. Whereas the dynamicity makes it difficult to remember the interface, the lack of feedback from the touched surface increases the problem and indeed does not help the user, who needs to look carefully at the device to check the position of the available displayed control at any given time and check that he adequately places his finger as required on the desired control for an operation to be properly recognised.

Embodiments of the present invention provide for a remote control (RC) device and system within which the remote control device operates. The RC device makes use of a dynamic display. According to certain embodiments of the present invention the user to can get a physical feedback about the selected control (or virtual button) displayed on the remote control. The system ensures that the virtual interface displayed on the RC device at any given time is the one related to the context at that given time as this depends on the user and on the state of the controlled device at that given time. By virtual interface in the context of the present invention it means the interface displayed on the remote control device. The virtual interface may comprise one or more controls at any given time depending on a given user and a given context, as will be described below.

The RC device, according to an embodiment of the present invention, preferably has a body which can be held in one of a user's hands. The RC device includes a dynamic display (the skilled person will realise that a display is otherwise known as a screen). Some embodiments of the present invention additionally comprise a joystick which preferably is easily reachable by the user using the thumb of the same hand which is being used to hold the RC device. The RC device according to all embodiments of the present invention further comprises wireless communication means towards the controlled device, the wireless communications means being preferably bidirectional. In other words the RC device, according to some embodiments of the present invention, comprises a bidirectional wireless communication interface. In embodiments of the present invention comprising a joystick, the joystick is preferably a physical joystick rather than a virtual one simply displayed on the screen and is preferably of sufficiently small size to be able to be conveniently manipulated by the user's thumb. According to various embodiments of the present invention, the joystick may be replaced by any suitable multi-way input device such as a trackball or a suitable arrangement of one or more rocker switches. Indeed any actuator providing for direction actions or confirmation/affirmation actions to be communicated to the remote control device may be used. The actuator, or multi-way input device, may be configured to be moveable in a plurality of directions that represent navigation in respective directions on a display (i.e. provide direction action) and may further be configured to provide confirmation/affirmation action. For example a four-way navigation key or a five-way navigation key which can be pushed down or which comprises a confirmation/affirmation button may be used. According to some embodiments the multi-way input device provides for any angle to be input to the remote control device whereas in others, only angles from within a set of pre-determined well-defined ranges may be input.

According to an embodiment, at a first instant in time, the virtual interface displayed on the screen shows a small number of icons (for instance 5 icons), each icon representing a particular control or command. The icons are arranged to each have a size which allows for the small number of icons, when displayed on the screen, to substantially cover the screen thereby adequately defining a number of well delineated directions around the joystick, each direction corresponding to a particular icon. Each icon can be easily selected by moving the joystick in its direction. By well delineated, it means that the icons are sufficiently well-spaced from each other such that a direction indicated by the joystick when moved towards a particular icon is well-defined. When the joystick position at a given time corresponds to a particular direction indicated by a particular icon the RC device formulates a predetermined command associated with that direction. The command may then be sent to the controlled device preferably via the bidirectional communication interface. In other words each icon is associated with a particular command (preferably each with a different command) and the particular command can be selected by moving the joystick in the direction of the particular icon associated with that command, said command then being relayed to the controlled device via the bidirectional wireless communication interface. At another instant in time, the interface displayed on the screen may show either a different number of icons or the same number of icons, at least one of which is associated with a different control from the icons shown at the first point in time. The icons and their number may depend on which user is operating the remote control device and on which context is active at the particular instant in time.

A system according to an embodiment of the present invention comprises the RC device and means for the RC device to communicate with the controlled device (a wireless communication channel). The system includes the controlled device. The controlled device should have a corresponding wireless communication interface so that it may receive commands from the remote control device via the wireless communication channel and send information back to the remote control device allowing it to display icons according to the current context.

According to another aspect of the present invention provision is made for a controlled device adapted to be able to cooperate with the remote control device. To this end the controlled device comprises a bidirectional communication interface module configured to receive commands from the remote control device. The controlled device is further adapted to be able to properly interpret and execute commands received from the remote control and to send results back in an expected manner. In this manner the controlled device is able to provide information to the remote control device which allows the remote control device to display a suitable graphical user interface as described above (menu). According to various embodiments of the present invention, the controlled device may be one of an IDTV, an STB, a TV, a DVD, a CD player, a tablet etc.

The joystick brings the materiality and feedback necessary to prevent the user having to look at the RC device when using it. The small number of the available icons makes the interface easier to learn and to remember.

In a preferred embodiment, the joystick is in the middle of the screen. The joystick can be moved in all directions over 360 degrees and the icons are displayed all around the joystick.

In an embodiment, the remote control device is configured such that it ensures that the joystick can only be moved in the directions of the displayed icons, blocking other movements so as to give a better physical feedback to the user.

In a preferred embodiment, the RC device includes an orientation mechanism. In particular, the orientation mechanism may be of use depending on whether the RC device has a shape allowing for its position to be either weakly associated, strongly associated or not associated at all with a particular orientation. For instance, the RC device may be in the shape of a bowl, with the screen being circular and the joystick being at the centre (like the circular action of the joystick suggests). In this case the RC device is not associated with a particular orientation in that no physical feature of the body can guide the user to always hold it in the same way. The orientation mechanism therefore makes sure that the set of icons on the displayed interface is always oriented the same way relatively to the user. To do this, the orientation mechanism is configured to provide an indication of the device orientation relative to the user's hand, said indication being used to provide position information for the icons such that the icons maintain their respective predetermined positions relative to the user's hand. In another embodiment, where the device has a shape allowing for its position to be strongly associated with a particular orientation, such as an oblong device having a point at one end, then the icons may simply be positioned relative to the shape of the RC device without regard for the device's absolute orientation or relative orientation with respect to the user's hand since the user should always hold it the same way.

Embodiments of controlled devices according to another aspect of the present invention may take the form of an integrated digital TV for example. The controlled devices may therefore be described as media players and are configured to receive media input comprising content and metadata. Content is that part of the media input which is to be rendered to the user and may be video content, audio content or audio/video content. Metadata is any other data included in the media input which is not media content and includes such things as conditional access related data (such as entitlement control messages (ECM) or entitlement management message (EMM) well known in the pay-TV or conditional access domains), packet ID (PID), programme specific information (PSI) such as programme association table (PAT), programme management tables (PMT) or programme counter (PCR) etc. Of particular interest in the context of the present invention is data which may be multiplexed into the media input (especially in the case of an MPEG transport stream for example) for the purpose of generating a graphical user interface (GUI), usually for displaying on the TV display. This information may be adapted for use with the RC device where a suitably adapted GUI is displayed on the display of the RC device. According to embodiments of the present invention where the media content is purely audio content the media input may still comprise GUI data for the purpose of displaying a GUI on the remote control device. Where the GUI data is included in the media input, such data may generally be useful for generating an electronic programme guide for instance. The GUI data is transmitted to the remote control device to be displayed on the remote control device's display. In general, data which is sent to the remote control device shall be known as graphical data as opposed to content.

The graphical user interface data which is transmitted to the remote control device may also be generated by the media player itself, depending on the context, instead of being included in the media input.

In a system in which an embodiment of the present invention is deployed, the media player receives media input comprising content and graphical data. The graphical data is context dependent. It may depend on the context of what is being rendered or depending on one or more parameters associated with the user. The content is rendered on the media player and the graphical data is transmitted via the bidirectional communication interface to the remote control device. The remote control device uses the graphical data to generate a graphical user interface

As is generally known in the pay-TV domain, a TV reception device may comprise a CAM for handling all aspects related to decryption of encrypted content. According to an embodiment of the present invention where a CAM is included in the controlled device. The CAM may be adapted to function according to the requirements of the present invention. In this case the CAM receives the commands from the remote control device, interprets and executes the commands and returns the necessary information to the RC device to create the menu to be displayed.

According to an embodiment of the present invention, the controlled device has also has a screen and a GUI, displayed on the controlled device's screen represents the icons on the RC device. The movement of the joystick is reproduced on the controlled device's display. The icons may furthermore be semi-transparent so as to be displayed on top of the original image on the controlled device's screen. This provides a further aid to allow for the user to not have to look at his RC device while using it to communicate with the controlled device.

In a preferred embodiment, the system dynamically loads the interface, depending on the context of the interaction. The icons are adapted to the available function and/or sub-functions of the layered interface.

In a preferred embodiment, the system adapts the icons and/or the displayed interface to the user, so to personalise the experience.

In an embodiment, processor in the controlled device computes the displayed interface (the icons) at a time at the level of the module embedded in the controlled device. It then sends to the RC device only the data required to draw the correct icons at the correct place. In another embodiment, the system sends to the RC device information about the context and the RC device is in charge of computing the displayed interface.

As mentioned above, embodiments of the present invention may be deployed in a system comprising a media player adapted to receive media content either from a broadcast source (cable, satellite, RF broadcast, IP network for example) or a storage device (a DVD or a server on a network such as the internet for example) and a hand-held remote control device having a display and wireless means for bi-directional communication with the media player. The media player may be a TV a set-top box, an integrated digital TV receiver, a DVD player or a digital radio for example. The media player preferably receives the media content in one of the known broadcast formats such as MPEG-2 for example. An MPEG-2 transport stream comprises the media content in the form of audio packets and video packets (where applicable). The transport stream also comprises data packets. The audio packets and video packets are rendered by the media player. The data packets include information useful in generating programme guides, subtitles, multimedia data etc. According to embodiments of the present invention, the receiver includes a processor which is adapted to produce data useful in generating a control interface. The processor may use at least some of the data packets to do this and may also take the current context into account. By current context it is meant that the media player can operate in one from a plurality of contexts. In each context a small number of commands are available depending on the context. The data useful in generating a control interface, known as control data, is sent to the remote control device via the bi-directional wireless communication channel to allow a menu generator module to generate a context dependent menu and to display the menu on the remote control's display. The display will then show a small number of designated regions, each designated region being associated with a command depending on the current context.

According to one embodiment of the present invention the designated region is fixed in that the display on the remote control device is divided into a small number of predetermined physical regions. Each region is unambiguously distinguished from another and may be easily selected by the user. The regions may be separated from each other by inactive regions corresponding to no command or instruction at all so that when the user points to it or touches it nothing happens. The inactive region should be large enough so that whatever pointing mechanism the user employs to select a region cannot inadvertently ambiguously select two adjacent regions. For example, if the pointing mechanism is a finger, then the width of the inactive region should preferably be of the order of the width of a user's finger. If the pointing mechanism is a joystick, then the inactive region should be wide enough to avoid that the joystick could point to two regions simultaneously. In the joystick version the joystick could be arranged such that movement into an inactive region is prevented or movement towards an active region is reinforced. If the pointing mechanism is a finger, then tactile feedback may be used to warn the user that he is on or near an inactive region.

According to another embodiment of the present invention the designated region is not predetermined but rather depends on the context. In one context there may only be two menu choices to display and so the remote control device would display two designated regions, with the two regions possibly taking up the whole display. In another context there could be four options to display or even five, with the four or five potions being disposed in an appropriate manner on the display. Each designated region should be arranged such that an unambiguous choice can be made without undue difficulty by the user with the aid of whatever pointing/selecting mechanism he is using (finger or multi-way input device). In this embodiment it is also possible to combine the physical feedback feature where the user is aided in knowing whether he is pointing to a designated region or not.

In all of the embodiments, since the RC device housed within a body and the device is hand-held (meaning the body is hand-held) and the display is within the body of the RC device, the available space on the display is restricted such that only a small number of menu functions are able to be arranged on the display at one time. This is fine since the menus are context-driven and so only a small number of choices need be presented at one time before going to the next level of menus where again a small number of options will be displayed. Their small number makes them easy to select with a high level of certainty i.e. in an unambiguous manner.

## Claims

1. A hand-held remote control device (110, 210, 310, 410, 510) for wirelessly transmitting at least one instruction to a media player operable to function within one from a plurality of different contexts, the remote control device being housed in a body and operable by a single hand of a user, the remote control device comprising:
a first display (120, 220, 320, 420, 520) within the body of the remote control device (110, 210, 310, 410, 510); and
a wireless communication interface (140, 240, 340, 440, 540) for transmitting the instruction to the media player;
the remote control device (110, 210, 310, 410, 510) **characterised in that**:
the wireless communication interface (140, 240, 340, 440, 540) is bidirectional, the remote control device (110, 210, 310, 410, 510) being configured to receive graphical content for producing an interactive context-driven menu via the bidirectional wireless communication interface (140, 240, 340, 440, 540);
the remote control device (110, 210, 310, 410, 510) is configured to display the context-driven menu on the first display, the context-driven menu comprising at least one designated region (130, 230, 430, 530) unambiguously selectable by the user during said single-handed operation, the designated region (130, 230, 430, 530) corresponding to the instruction, said instruction being associated with a current context from the plurality of different contexts; and
the remote control device (110, 210, 310, 410, 510) is further configured such that when the designated region (130, 230, 430, 530) is selected by the user, the corresponding instruction is transmitted via the bidirectional wireless communication interface (140, 240, 340, 440, 540).

2. The hand-held remote control device (210, 310, 410, 510) according to claim 1, further comprising a multi-way input device (250, 350, 450, 550) configured to allow the user to navigate the first display (220, 320, 420, 520) and to select the designated region (230, 430, 530).

3. The hand-held remote control device (210, 310, 410, 510) according to claim 2, wherein the multi-way input device (250, 350, 450, 550) is a physical element positioned on the hand-held remote control device in a way which allows the multi-way input device to be manipulated by a part of the user's said single hand.

4. The hand-held remote control device (210, 310, 410, 510) according to either of claims 2 or 3, wherein the multi-way input device (250, 350, 450, 550) is one from: a joystick, a trackball or a configuration of one or more rocker buttons adapted to provide directional indication and select functionality.

5. The hand-held remote control device (110, 210, 310, 410, 510) according to any of the preceding claims, wherein it is further configured to provide feedback to the user to guide the user towards the designated region to be selected.

6. The hand-held remote control device (110, 210, 310, 410, 510) according to any of the preceding claims, wherein it further comprises an orientation detector configured to detect an orientation of the hand-held remote control device (110, 210, 310, 410, 510) relative to the user's hand in order to always present the designated region in a same position relative to the user's hand.

7. The hand-held remote control device (110, 210, 310, 410, 510) according to any of the preceding claims, wherein it further comprises a memory to store at least one preference associated with the user, the interactive context-driven menu being further based on the preference associated with the user.

8. The hand-held remote control device (110, 210, 310, 410, 510) according to claim 7, wherein the memory is configured to store a plurality of different at least one preferences, each preference associated with a different user from a plurality of users and the hand-held remote control device (110, 210, 310, 410, 510) further comprises a fingerprint reader configured to detect which user from the plurality of users holds the device, said detection being used as a basis to select one from the plurality of preferences and to apply that preference to the interactive context-driven menu.

9. A media player (511) comprising:
a receiver (570, 580) for receiving media input comprising media content and graphical content;
a wireless communication interface (540) for receiving at least one instruction from a remote control device (510); and
a second display (521) for displaying at least the media content;
the media player (511) **characterised in that**:
it further comprises a processor (560) for processing at least the graphical content to provide information useful in building an interactive context-driven menu based on a current context from a plurality of possible contexts within which the media player (511) may function; and
the wireless communication interface (540) is bidirectional, the media player (511) being configured to transmit the information useful in building the interactive context-driven menu to a remote control device (510) via the bidirectional wireless communication interface (540).

10. The media player (511) according to claim 9, wherein it is further configured to display the interactive context-driven menu on the second display.

11. The media player (511) according to either of claims 9 or 10, wherein the processor (560) is a conditional access module.

12. A system comprising a hand-held remote control device (110, 210, 310, 410, 510) according to claim 1 and a media player (511) according to claim 9, the remote control device (110, 210, 310, 410, 510) and the media player (511) configured to communicate with each other via a bidirectional wireless communication channel (540, 541), wherein:
the media player (511) is configured to transmit to the remote control device (110, 210, 310, 410, 510), via the bidirectional wireless communication channel (540, 541), graphical content useful in producing an interactive context-driven menu based on a current context from a plurality of possible contexts within which the media player (511) may function; and
the remote control device (110, 210, 310, 410, 510) is configured to transmit to the media player (511), via the bidirectional wireless communication channel (540, 541), at least one instruction based on an at least one gesture by a user on the interactive context-driven menu.
